# FASCICULE DE BREVET EUROPEEN

(11) **EP 1 180 076 B1**
(45) Date de publication et mention de la délivrance du brevet: **18.05.2005**
(21) Numéro de dépôt: 00935252.7
(22) Date de dépôt: 23.05.2000
(51) Int. Cl.: B60J 7/047, B60J 7/057

(54) **TOIT RETRACTABLE DANS LE COFFRE ARRIERE D'UN VEHICULE DECOUVRABLE**
IM KOFFERRAUM EINES KRAFTFAHRZEUGS VERSENKBARES DACH
RETRACTABLE ROOF IN THE REAR BOOT OF A COVERABLE VEHICLE

(30) Priorité: 26.05.1999 FR 9906655; 21.12.1999 FR 9916174
(43) Date de publication de la demande: 20.02.2002
(73) Titulaire: Société Européenne des Brevets Automobiles, 75011 Paris (FR)
(72) Inventeur: QUEVEAU, Gérard, F-79140 Cerizay (FR); QUEVEAU, Paul, F-79140 Cerizay (FR); GUILLEZ, Jean-Marc, F-79140 Cerizay (FR)
(74) Mandataire: Rémont, Claude
(86) Numéro de dépôt international: PCT/FR2000/001406
(87) Numéro de publication internationale: WO 2000/073096

(56) Documents cités:
- EP-A- 0 101 322
- DE-A- 3 635 887
- US-A- 5 078 447
- US-A- 5 746 470

## Description

La présente invention concerne un toit rétractable dans le coffre arrière d'un véhicule découvrable.

On connaît des toits rétractables dans le coffre arrière d'un véhicule découvrable, tels que définis dans le préambule de la revendication 1 et par example dans US-A-5 078 447.

Cependant, la structure de ces toits rétractables connus est complexe car constituée de nombreuses pièces ce qui les rend coûteux et non utilisables sur un véhicule de gamme moyenne fabriqué en grande série.

Le but de la présente invention est de remédier aux inconvénients des toits rétractables connus, et de proposer un toit rétractable du type précité qui soit simple, économique et fiable.

Suivant l'invention, ce toit rétractable est caractérisé, comme indiqué dans la partie caractérisante de la revendication 1.

Le toit rétractable selon l'invention est ainsi constitué par un nombre réduit de pièces, ce qui permet d'en réduire le coût, de garantir un fonctionnement sûr et fiable et de réduire l'encombrement du toit en position de rangement dans le coffre arrière.

Selon une version préférée de l'invention, les extrémités supérieures des glissières sont situées respectivement près de l'avant du bord inférieur de l'élément de toit arrière et près de l'arrière de ce bord.

Aux dessins annexés donnés à titre d'exemples non limitatifs :
- la figure 1 est une vue schématique en élévation d'un toit rétractable selon l'invention ;
- la figure 2 montre le toit replié à l'intérieur du coffre,
- la figure 3 illustre une autre version du repliage du toit à l'intérieur du coffre ;
- la figure 4 est une vue schématique de l'élément arrière du toit, des glissières , du câble et du moteur d'entraînement de ce dernier ;
- la figure 5 est une vue suivant F de la figure 4 ;
- la figure 6 montre un vérin pour commander le déplacement de l'élément arrière du toit ;
- la figure 7 est une vue schématique en élévation, avec arrachement, de l'arrière d'un véhicule comportant une variante de toit découvrable dont les éléments sont repliés dans le coffre;
- la figure 8 est une vue très agrandie d'un détail de la figure 7 ;
- la figure 9 est une vue semblable à la figure 1 du mode de réalisation schématisé figures 7 et 8 ;
- la figure 10 est une vue très agrandie illustrant les glissières de la figure 9 ;
- la figure 11 est une vue partielle agrandie en coupe selon XI-XI à la figure 10 ;
- la figure 12 est une vue schématique semblable à la figure 1 d'un autre mode de réalisation de l'invention ;
- la figure 13 est une vue agrandie d'un détail de la figure 12 illustrant les moyens de liaison entre l'élément de toit avant et le troisième élément de toit ;
- la figure 14 est une vue semblable à la figure 13 représentant les éléments de toit repliés dans le coffre ;
- la figure 15 montre différentes positions prises par les trois éléments du toit entre les positions représentées respectivement aux figures 13 et 14 ;
- la figure 16 est une vue agrandie du détail A de la figure 14 selon une variante ;
- la figure 17 est une vue semblable à la figure 13 illustrant les moyens de verrouillage des éléments de toit dans leur position fermée ;
- la figure 18 est une vue agrandie de dessus d'un détail de la figure 17 ;
- la figure 19 est une vue en perspective illustrant une réalisation d'arceau escamotable utilisable avec le mode de réalisation des figures 7 à 16.

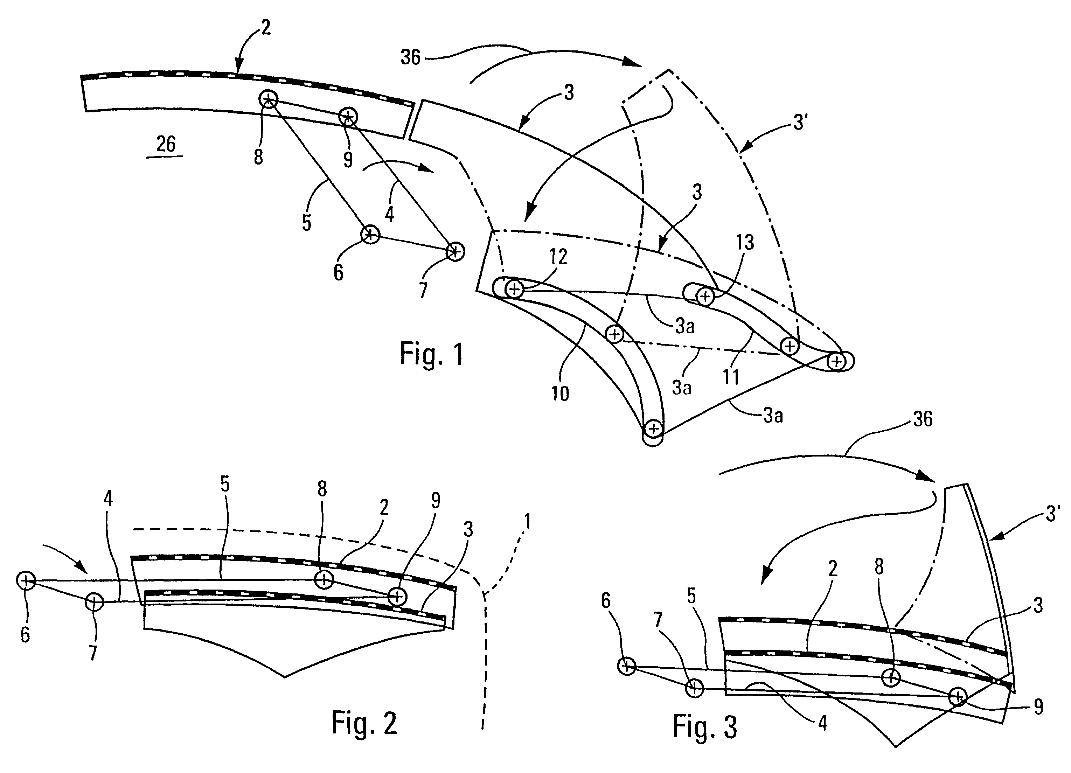

Figures 1 et 2, le toit 29 rétractable dans le coffre arrière 1 d'un véhicule découvrable 30, comprend un élément de toit avant 2 et un élément de toit arrière 3, reliés à la carrosserie 31 du véhicule 30 par des moyens permettant de déplacer les deux éléments 2, 3 ci-dessus entre une position dans laquelle (voir figure 1) ces deux éléments 2, 3 recouvrent l'habitacle 26 du véhicule 30 et une position (voir figures 2 et 3) dans laquelle ceux-ci sont rangés dans le coffre arrière 1.

Les moyens ci-dessus comprennent, d'une part, deux bras 4, 5 reliés de façon pivotante à la carrosserie 31 par des articulations 6, 7 et à l'élément de toit avant 2 par d'autres articulations 8, 9 de façon à constituer un quadrilatère, le cas échéant un parallélogramme, déformable et, d'autre part, deux glissières 10, 11 solidaires de la carrosserie 31.

Dans chacune de ces glissières 10, 11 est engagé un galet 12, 13 porté par le bord inférieur 3a de l'élément de toit arrière 3.

L'extrémité supérieure des glissières 10, 11 est située près du bord inférieur 3a de l'élément de toit arrière 3 et l'extrémité inférieure des glissières est située à l'intérieur du coffre arrière 1.

Les glissières 10, 11 sont conformées pour guider le déplacement de l'élément de toit arrière 3 entre une position dans laquelle (voir figure 1) cet élément 3 recouvre la partie arrière de l'habitacle du véhicule et une position dans laquelle (voir figure 2) cet élément 3 est entièrement logé dans le coffre arrière 1.

Par ailleurs, les deux bras 4, 5 articulés à l'élément de toit avant 2 peuvent pivoter entre une position (voir figure 1) dans laquelle cet élément 2 recouvre la partie avant de l'habitacle et une position (voir figure 2) dans laquelle cet élément 2 est entièrement logé dans le coffre arrière 1 dans une position sensiblement parallèle à l'élément de toit arrière 3.

Figure 1, les extrémités supérieures des glissières 10, 11 sont situées respectivement près de l'avant du bord inférieur 3a de l'élément de toit arrière 3 et près de l'arrière de ce bord 3a.

D'autre part, la glissière 10 dont l'extrémité supérieure est située près de l'avant du bord inférieur 3a de l'élément de toit arrière a une forme sensiblement en arc de cercle dont la convexité est dirigée vers l'arrière et vers le haut du coffre 1.

L'autre glissière 11 a sensiblement la forme d'un S très aplati s'étendant vers l'arrière et le bas du coffre 1.

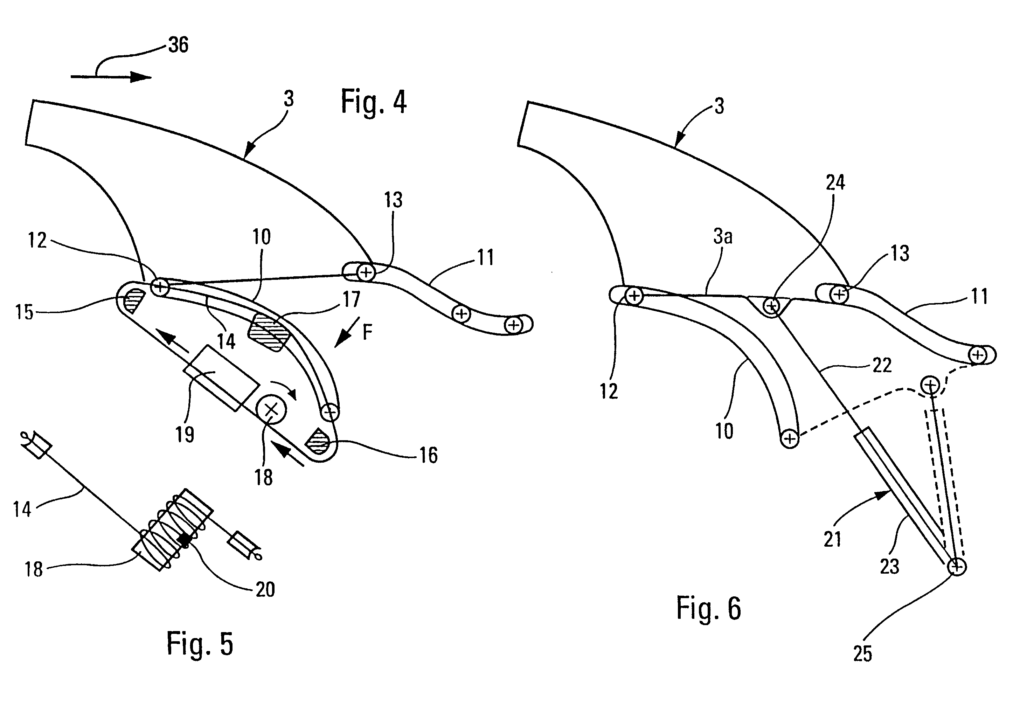

Figure 4, l'élément de toit arrière 3 est entraîné le long des glissières 10, 11 au moyen d'un câble 14 solidaire de l'un des galets 12, dont le déplacement suivant la glissière correspondante 10 est guidé au moyen de guides 15, 16, 17.

Figure 4, le câble 14 est enroulé en boucle autour des trois guides 15, 16, 17 qui sont disposés respectivement près des extrémités opposées de la glissière 10 et près du milieu de celle-ci.

Figure 5, le câble 14 est en outre enroulé plusieurs tours sur un cylindre 18 dont la rotation est commandée par un moteur électrique 19.

Pour éviter tout glissement, le câble 14 est fixé sur le cylindre 18 en un point 20.

Figure 6, l'élément de toit arrière 3 est entraîné le long des glissières 10, 11 au moyen d'un vérin 21 dont la tige 22 est fixée de façon articulée en un point 24 du bord inférieur 3a de l'élément de toit arrière 3.

Le corps 23 du vérin 21 est fixé de façon articulée en un point 25 de la carrosserie.

La figure 6 montre les deux positions extrêmes du vérin 21 et de l'élément de toit arrière 3.

Selon une première version, le toit rétractable 29 peut comprendre des moyens pour commander successivement l'entraînement de l'élément de toit arrière 3 jusqu'à sa position de rangement dans le coffre, puis l'entraînement de l'élément de toit avant 2 jusqu'à une position de rangement dans le coffre où cet élément 2 est disposé au-dessus de l'élément de toit arrière 3, comme montré sur la figure 2.

Dans une seconde version, le toit rétractable 29 comprend des moyens pour commander successivement l'entraînement de l'élément de toit arrière 3 jusqu'à une position intermédiaire 3' (voir figures 1 et 3) dans laquelle cet élément dégage l'accès au coffre 1 pour l'élément de toit avant 2, puis l'entraînement de cet élément de toit avant 2 vers la position de rangement dans le coffre 1 et ensuite le déplacement final de l'élément de toit arrière 3 vers une position de rangement dans le coffre où cet élément 3 est disposé au-dessus de l'élément de toit avant 2, comme indiqué sur la figure 3.

Dans ce cas, les deux éléments de toits 2 et 3 occupent moins de place dans le coffre arrière que dans le cas de la figure 2.

La commande du pivotement des bras 4, 5 vers le coffre arrière 1 peut être réalisée, au moyen d'un moteur électrique dont l'arbre de sortie est relié à l'une des articulations 6, 7.

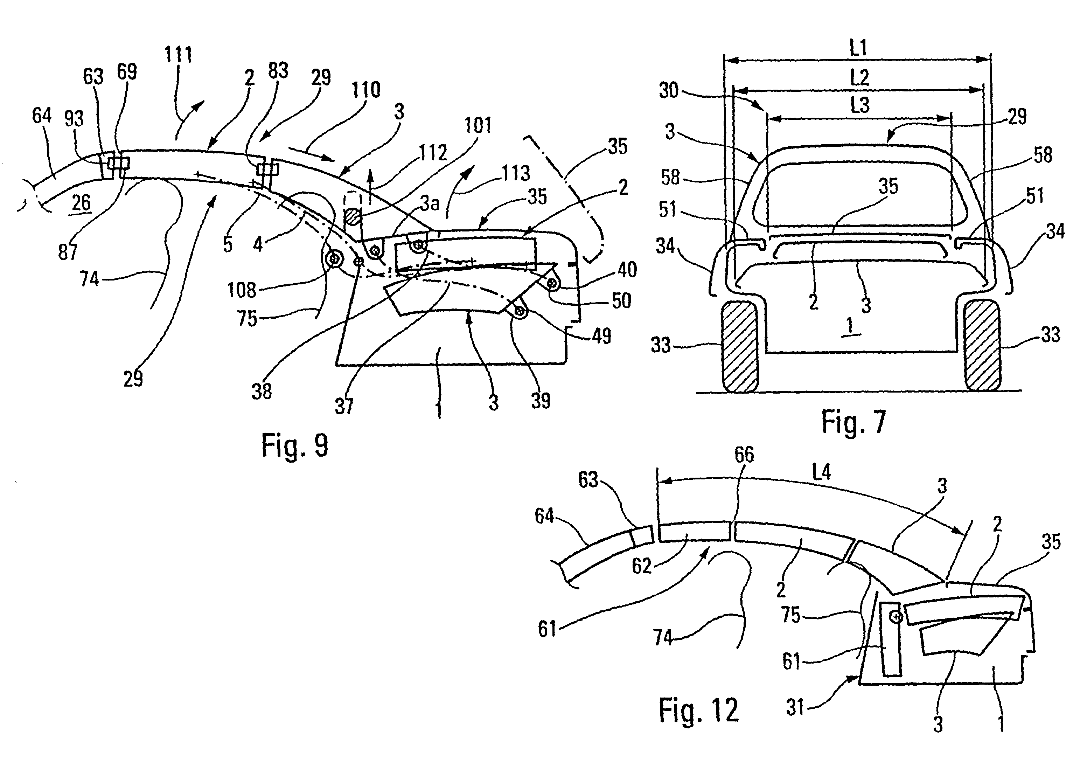

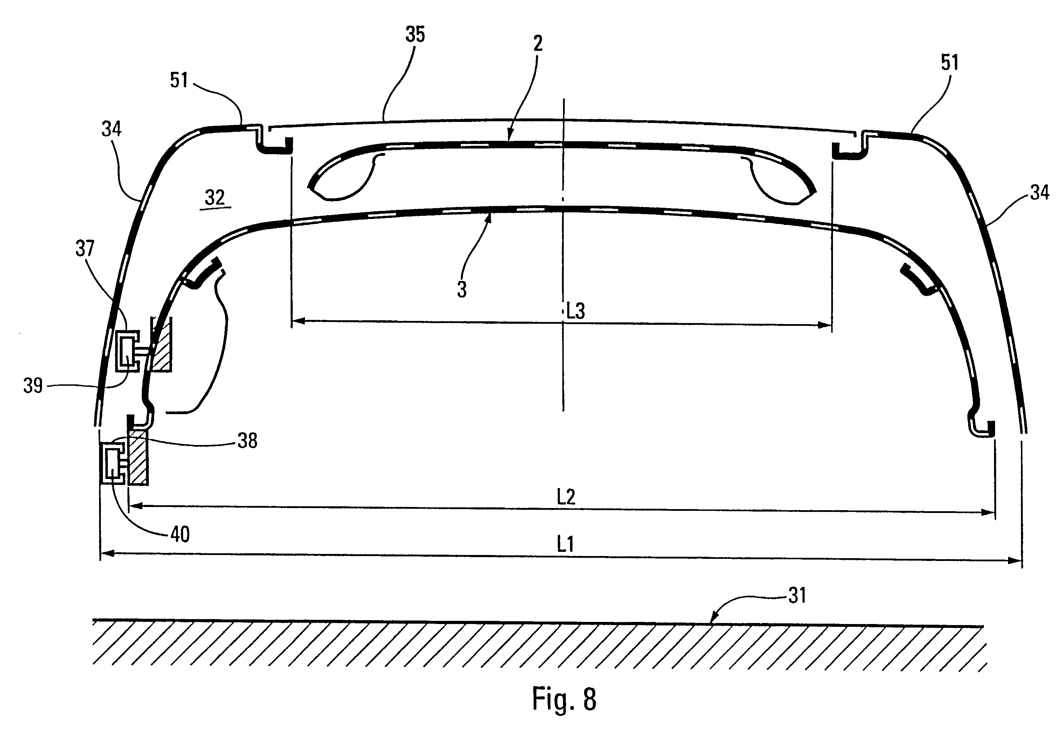

Figures 7 et 8, le coffre arrière 1 a une largeur maximale L1, dans la partie de coffre 32 située au-dessus des roues 33, légèrement plus grande que la largeur maximale L2 de l'élément de toit arrière 3.

Figure 7, un tel véhicule 30 a des ailes arrière 34 donnant à l'arrière du véhicule une largeur totale plus grande que la largeur L2 de la base du toit, ce qui correspond au style proche d'un coupé.

On peut ainsi profiter de la largeur L1 disponible dans le coffre 31 au-dessus des roues 33 sans pour autant imposer au couvercle 35 du coffre arrière 1 une largeur égale à la largeur maximum L1.

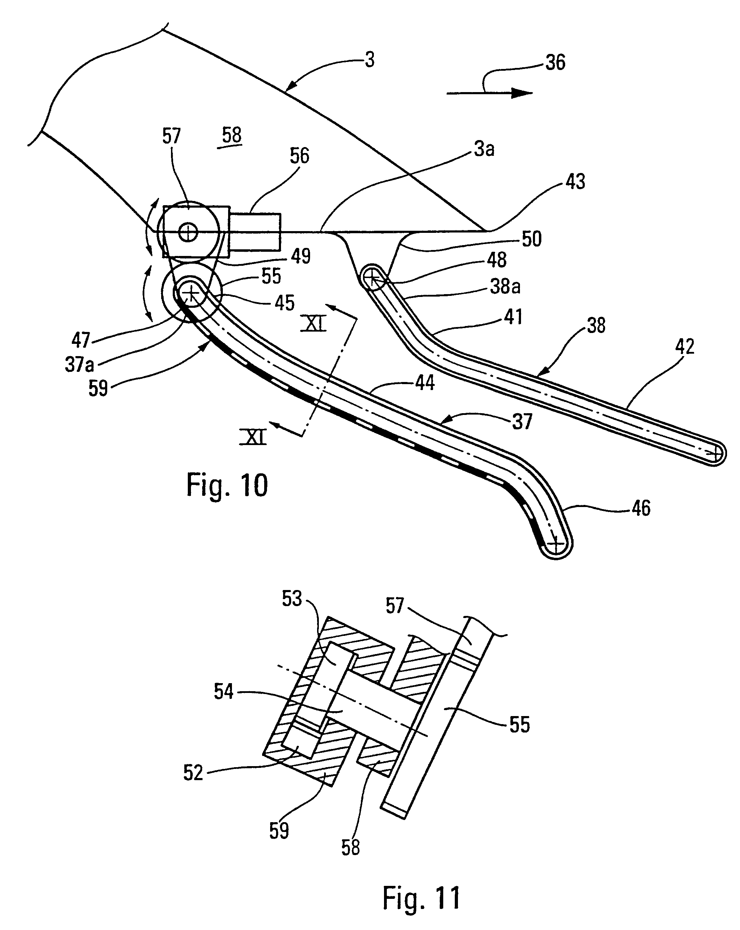

Comme schématisé figure 7, on peut donner au couvercle 35 une largeur L3 plus faible et d'aspect plus esthétique permettant, dans la position ouverte du couvercle 35 de l'avant vers l'arrière schématisée à la figure 9, d'introduire l'élément de toit avant 2 dont la largeur est nettement plus faible que la largeur maximale L2 de l'élément de toit arrière 3.

Il suffit pour cela de faire en sorte que l'élément de toit arrière 3, lors de son déplacement dans le sens 36 de l'avant vers l'arrière, soit guidé de façon à glisser vers le bas et vers l'arrière et à se loger sous les ailes arrière 34 du véhicule 30 à l'intérieur de la partie 32 du coffre 1 dont le couvercle 35 peut indifféremment être ouvert ou fermé.

A cet effet, Figures 9 et 10, les glissières avant 37 et arrière 38 ont chacune un profil respectif conformé, et les galets 39, 40 sont fixés sur le bord latéral inférieur 3a de l'élément de toit arrière 3, de façon à obtenir ce glissement de l'élément de toit arrière 3 sous les ailes 34.

Figure 10, la glissère arrière 38 a un profil coudé comprenant dans le sens 36 de l'avant vers l'arrière un premier tronçon 41 sensiblement rectiligne ayant une première pente dirigée vers l'arrière et vers le bas, suivie par un second tronçon 42 sensiblement rectiligne ayant une seconde pente inférieure à la première pente.

La pente plus élevée du premier tronçon 41 permet de faire plonger rapidement le bord arrière 43 de l'élément de toit arrière 3 à l'intérieur de la partie 32 du coffre 1, tandis que la pente plus faible du second tronçon 42 guide ledit bord arrière 43 sensiblement selon la pente du couvercle 35 du coffre arrière.

La glissière avant 37 a un profil sensiblement en S comprenant un tronçon central 44 sensiblement rectiligne ayant une pente intermédiaire entre la première pente et la seconde pente de la glissière arrière 38. Le tronçon central 44 est précédé vers l'avant et vers le haut par un tronçon supérieur 45 court et est suivi vers le bas et vers l'arrière par un tronçon inférieur 46 court tous deux de plus fortes pentes.

Figure 10, les galets avant 47 et arrière 48 sont fixés sur des goussets respectifs avant 49 et arrière 50 s'étendant vers le bas à partir du bord latéral inférieur 3a de l'élément de toit arrière 3.

Ainsi, notamment figures 8 à 10, les extrémités supérieures respectives 37a, 38a des glissières 37, 38 sont situées sous la surface supérieure sensiblement horizontale 51 des ailes arrières 34 correspondantes du véhicule, cette surface 51 délimitant sensiblement un plan de séparation entre la carrosserie proprement dite et l'élément de toit arrière 3.

L'élément de toit arrière 3 peut être actionné par exemple par un système à câbles du type décrit ci-dessus.

Figures 10 et 11, l'une des glissières, 59, a une coupe transversale sensiblement en C comportant une crémaillère 52.

Le galet correspondant 53 est un pignon engrenant avec la crémaillère 52 et entraîné par un arbre 54 solidaire d'un second pignon 55 actionné par un moteur électrique 56 par l'intermédiaire d'un pignon moteur 57.

Le moteur électrique 56 est fixé dans la custode correspondante 58 qui fait partie de l'élément de toit arrière 3, comme schématisé aux figures 10 et 11.

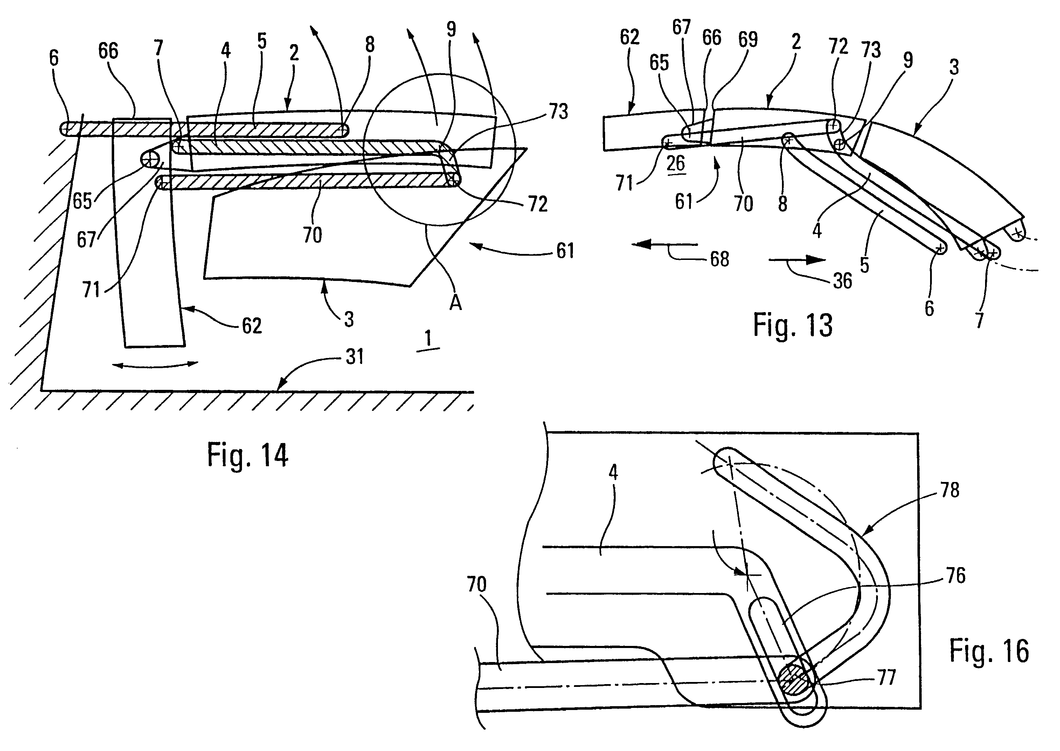

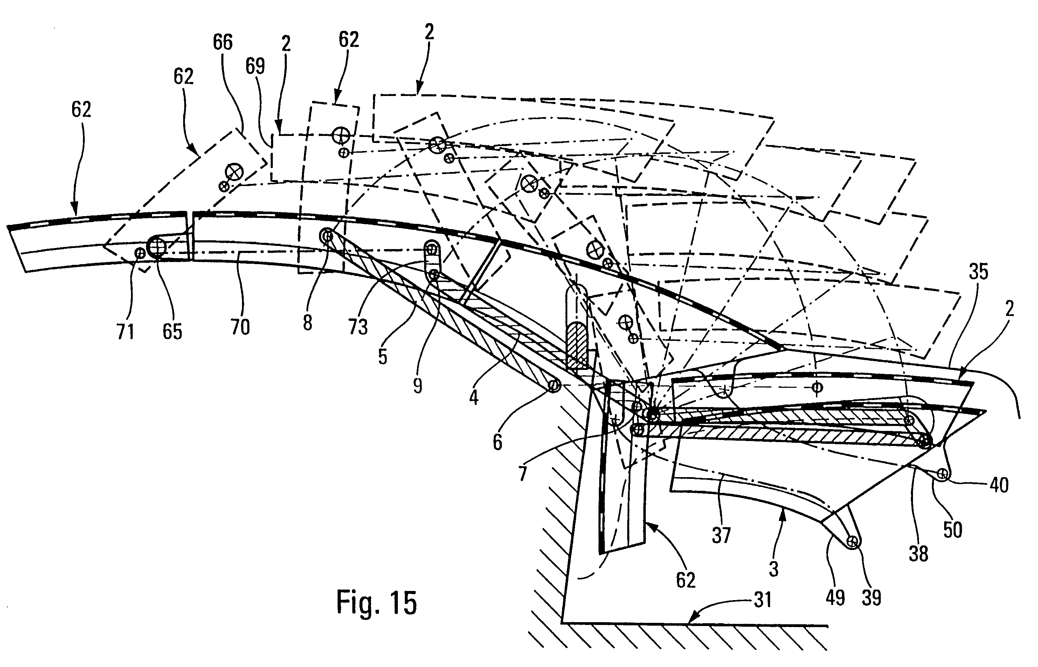

Figures 12 à 16, le toit rétractable 61 comporte, en avant de l'élément de toit avant 2, un troisième élément de toit 62 mobile, et des moyens pour déplacer ledit troisième élément de toit 62 dans un sens ou dans l'autre entre une position fermée, schématisée à la figure 12, dans laquelle il recouvre l'habitacle 26 entre l'élément de toit avant 2 et la traverse 63 du pare-brise 64, et une position ouverte, schématisée à la figure 14, dans laquelle il est rangé dans le coffre arrière 1 avec les éléments de toit avant 2 et arrière 3.

Figures 13 et 14, le troisième élément de toit 62 est monté articulé sur l'élément de toit avant 2, par exemple, de chaque côté du véhicule, par un point d'articulation principal 65 situé près du bord arrière 66 dudit troisième élément 62 et porté par un doigt 67 en saillie vers l'avant, dans le sens de la flèche 68, par rapport au bord avant 69 de l'élément de toit avant 2.

Le troisième élément de toit 62 est en outre relié à l'élément de toit avant 2 par un levier 70 articulé à son extrémité avant en un point d'articulation avant 71 situé en avant du point d'articulation principal 65, et à son extrémité arrière en un point d'articulation arrière 72 porté, par exemple, par un prolongement 73 vers le haut du bras arrière 4 de manière telle que le troisième élément de toit 62 se retrouve dans sa position ouverte, schématisée aux figures 12, 14 et 15, dans une position sensiblement verticale devant les éléments de toit avant 2 et arrière 3.

Cette disposition permet de concevoir un véhicule présentant deux places avant normales pour des passagers avant, schématisés en 74, et deux vraies places arrière pour des passagers arrière schématisés en 75, aux figurés 9 et 12, ainsi qu'un toit 61 ayant dans la direction longitudinale une longueur, schématisée en L4 à la figure 12, relativement grande et plus proche de celle d'un coupé que de celle d'un cabriolet.

La disposition en position verticale du troisième élément 62 à l'intérieur du coffre 1 permet, avec la disposition précitée des éléments de toit avant 2 et arrière 3 en position sensiblement horizontale, de réserver à l'intérieur du coffre 1 un espace réservé aux bagages de volume satisfaisant.

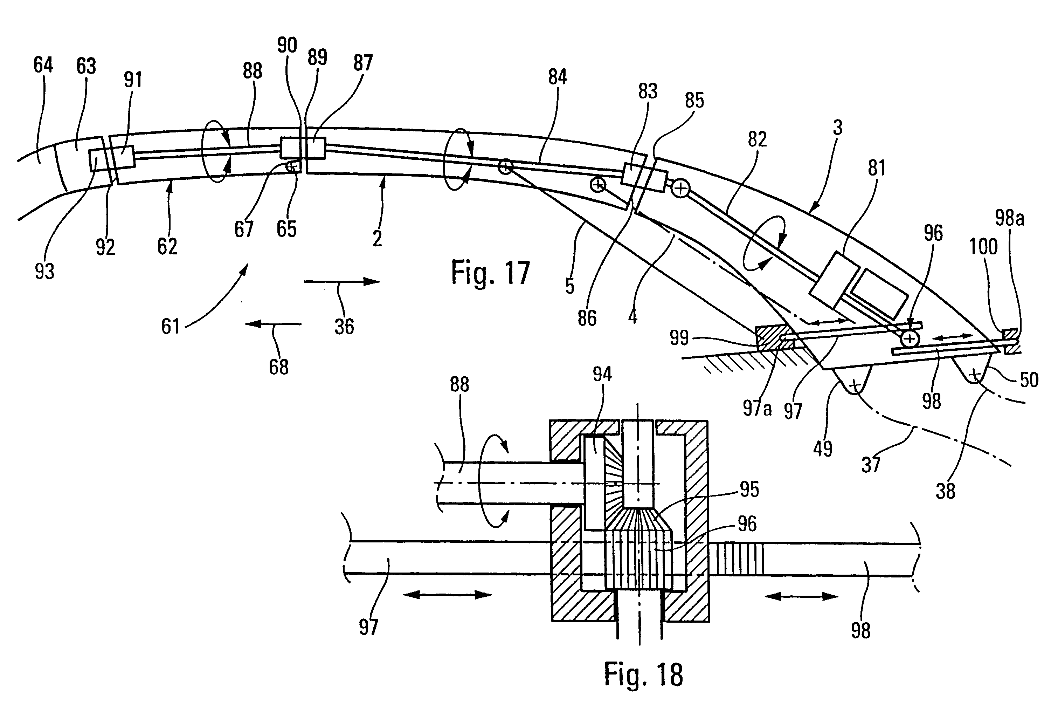

Pour guider de façon extrêmement précise le déplacement du troisième élément de toit 62 entre sa position ouverte et sa position fermée, le prolongement 73 du bras arrière 4 comporte, dans le mode de réalisation de la figure 16, une ouverture oblongue 76 traversée par un axe 77 constituant le point d'articulation arrière 72 du levier 70.

L'axe 77 coulisse d'une part le long de l'ouverture oblongue 76 et d'autre part le long d'une seconde ouverture coudée 78 ménagée dans une paroi fixe solidaire de l'élément de toit avant 2 et faisant office de came pour guider le mouvement angulaire du troisième élément de toit 62.

Il est nécessaire de verrouiller, au moins dans leur position fermée, chacun des deux ou trois éléments de toit décrits ci-dessus l'un par rapport à l'autre et par rapport à la carrosserie 31 du véhicule 30 dans le sens longitudinal et un/ou dans le sens transversal.

Figures 17 et 18, le toit rétractable 61 comporte des moyens de verrouillage des éléments de toit 2, 3, 62 constitués et/ou actionnés par des tiges rotatives successives comprenant des moyens de transmission du mouvement de rotation d'une tige 82, 84 à l'autre 84, 88 et d'un élément de toit 3, 2 à l'autre 2, 62, par exemple du type décrit dans WO-A-054 997. Ce document n'est pas pris en considération pour l'appréciation de l'activité inventive.

Figures 17 et 18, un moteur électrique 81 logé dans chaque custode 58 entraîne une première tige rotative 82 dont l'extrémité supérieure aboutit à un premier moyen d'accouplement 83 assurant à la fois la transmission du mouvement de rotation à la seconde tige rotative 84 portée par l'élément de toit avant 2, et le verrouillage du bord avant 85 de l'élément de toit arrière 3 avec le bord arrière 86 de l'élément de toit avant 2.

De même, la seconde tige 84 aboutit à un second moyen d'accouplement 87 assurant à la fois la transmission du mouvement de rotation à la troisième tige 88 portée par le troisième élément de toit 62, et le verrouillage du bord avant 89 de l'élément de toit avant 2 avec le bord arrière 90 du troisième élément de toit 62.

L'extrémité avant de la troisième tige 88 se termine par un moyen de verrouillage 91 assurant le verrouillage du bord avant 92 du troisième élément de toit 62 avec un moyen de verrouillage complémentaire 93 de la traverse 63 du pare-brise 64.

Les moyens de verrouillage 83, 87, 91, 93 sont par exemple décrits dans WO-A-054997.

A son extrémité inférieure, la première tige rotative 82 comporte, comme schématisé à la figure 18, un premier pignon conique 94 engrenant avec un second pignon conique 95 solidaire d'un pignon à denture droite 96 qui engrene avec deux crémaillères 97, 98 situées de part et d'autre du pignon droit 96 et entraînées par ce dernier dans des sens différents.

Chaque crémaillère 97, 98 comporte à son extrémité un doigt conique 97a, 98a, adapté à s'engager dans un logement respectif 99, 100 de la carrosserie 31 du véhicule 30 pour verrouiller la base de l'élément de toit arrière 3 sur ladite carrosserie 31.

Les moyens de verrouillage peuvent comprendre également des doigts coulissants dans la direction transversale du véhicule actionnés par la tige rotative correspondante 82, 84, 88 par l'intermédiaire d'un pignon et d'une crémaillère respectifs (non représentés).

Figures 9 à 16, l'arceau de sécurité doit obligatoirement être un arceau escamotable adapté à être en position basse dans la position fermée du toit rétractable pour ne pas gêner le mouvement vers l'arrière de l'élément de toit arrière 3 se glissant sous le couvercle 35 du coffre 1 et sous les ailes arrière 34 du véhicule.

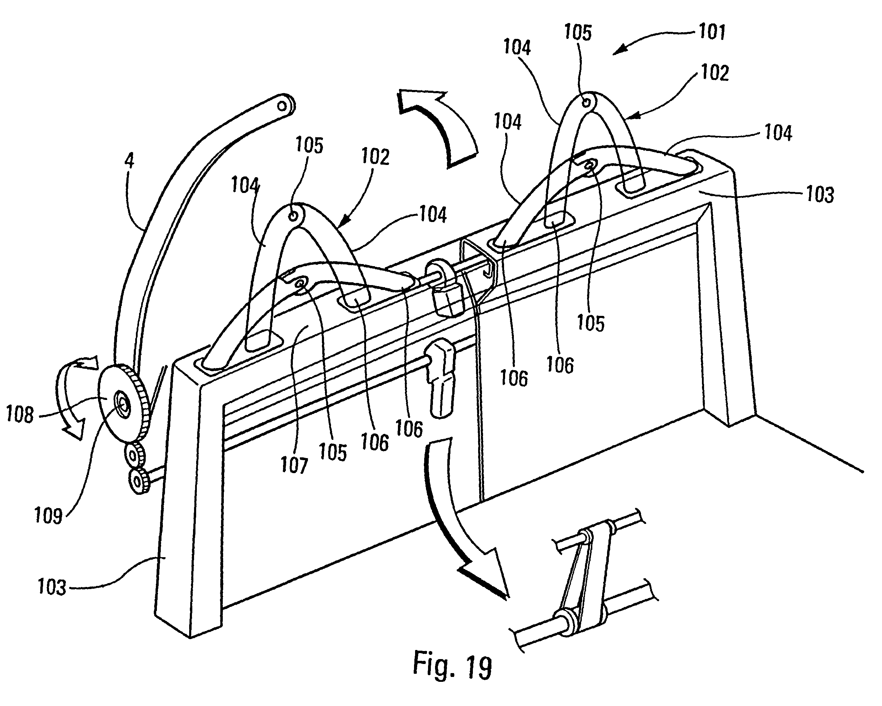

Cet arceau escamotable peut être d'un type quelconque, et peut être par exemple un arceau escamotable du type décrit dans (WO-A- 055 015) schématisé à la figure 19. Ce document, n'est pas pris en considération pour l'appréciation de l'activité inventive.

Dans cet exemple, l'arceau escamotable 101 est constitué de deux arceaux individuels 102 agencés chacun dans le dossier 103 du siège arrière correspondant.

Chaque arceau individuel 102 est constitué de deux éléments d'arceau 104 articulés l'un à l'autre en 105 au sommet de l'arceau 102.

Les extrémités inférieures 106 des deux éléments d'arceaux 104 d'un même arceau individuel 102 peuvent se déplacer dans des sens différents dans la direction transversale du véhicule entre une première position escamotée, dans laquelle les deux extrémités 106 sont éloignées l'une de l'autre et l'articulation 105 est proche de la surface supérieure 107 du dossier 103, et une seconde position sortie dans laquelle les deux extrémités 106 sont rapprochées l'une de l'autre et l'articulation 105 est éloignée au maximum au-dessus de la surface 107.

Ce mouvement est par exemple commandé par la rotation d'une tige filetée comportant des parties filetées de pas opposés pour les deux extrémités 106 des éléments 104 d'un même arceau 102.

Pour faire en sorte que l'arceau escamotable 101 soit en position haute ou basse respectivement lorsque le toit rétractable est dans sa position ouverte ou fermée, le déplacement dudit arceau 101 de l'une de ses positions à l'autre est commandé, dans le mode de réalisation de la figure 19, par le déplacement correspondant de l'élément de toit avant 2, par exemple par l'intermédiaire d'un pignon 108 monté sur l'axe de rotation 109 de l'un des bras 4, 5, le bras avant 4 à ladite figure 19.

Ainsi, lors de l'ouverture du toit, l'élément de toit arrière 3 est ouvert en premier alors que l'élément de toit avant 2 est dans sa position fermée et que l'arceau escamotable 101 est dans sa position escamotée qui ne gêne pas le déplacement de l'élément de toit arrière 3 schématisé par la flèche 110 à la figure 9.

Lorsque l'élément de toit arrière 3 est dans sa position rangée à l'intérieur du coffre arrière 1, l'élément de toit avant 2 peut être ouvert, comme schématisé par la flèche 111 à la même figure 9, par actionnement des bras 4 et 5, et l'arceau escamotable 101 peut être en même temps sorti vers sa position haute, comme schématisé par la flèche 112 à cette figure 9.

L'introduction de l'élément de toit avant 2 à l'intérieur du coffre arrière 1 nécessite l'ouverture de tout ou partie du couvercle 35 dudit coffre 1, comme schématisé par la flèche 113.

Pour le mouvement inverse de fermeture du toit, il faut ouvrir le couvercle 35 et déplacer l'élément de toit avant 2 de sa position dans le coffre 1 vers sa position fermée, l'arceau escamotable 101 étant en même temps escamoté.

Il est alors possible de faire passer l'élément de toit arrière 3 de sa position à l'intérieur du coffre 1 vers sa position fermée sans être gêné par l'arceau 101.

Le processus est le même lorsque le toit rétractable comporte un troisième élément 62, comme schématisé à la figure 14.

## Revendications

1. Toit (29, 61) rétractable dans le coffre arrière (1) d'un véhicule découvrable (30), comprenant au moins un élément de toit avant (2) et un élément de toit arrière (3), reliés à la carrosserie (31) du véhicule (30) par des moyens permettant de déplacer les deux éléments (2, 3) ci-dessus entre une position dans laquelle ces deux éléments (2, 3) recouvrent l'habitacle (26) du véhicule (30) et une position dans laquelle ceux-ci sont rangés dans le coffre arrière (1), **caractérisé en ce que** les moyens ci-dessus comprennent, d'une part, deux bras (4, 5) reliés de façon pivotante à la carrosserie (31) par des articulations (6, 7) et à l'élément de toit avant (2) par d'autres articulations (8, 9) de façon à constituer un quadrilatère déformable et, d'autre part, deux glissières (10, 11; 37, 38; 59) solidaires de la carrosserie dans chacune desquelles est engagé un galet (12, 13; 39, 40; 53) porté par le bord inférieur (3a) de l'élément de toit arrière (3), l'extrémité supérieure des glissières (10, 11; 37, 38; 59) étant située près du bord inférieur (3a) de l'élément de toit arrière (3) et l'extrémité inférieure des glissières (10, 11; 37, 38; 59) étant située à l'intérieur du coffre arrière (1), les glissières (10, 11; 37, 38; 59) étant conformées pour guider le déplacement de l'élément de toit arrière (3) entre une position dans laquelle cet élément (3) recouvre la partie arrière de l'habitacle (26) du véhicule (30) et une position dans laquelle cet élément (3) est entièrement logé dans le coffre arrière (1), les deux bras (4, 5) articulés à l'élément de toit avant (2) pouvant pivoter entre une position dans laquelle cet élément (2) recouvre la partie avant de l'habitacle (26) et une position dans laquelle cet élément (2) est entièrement logé dans le coffre arrière (1) dans une position sensiblement parallèle à l'élément de toit arrière (3), et **en ce que**, de préférence, les extrémités supérieures des glissières (10, 11) sont situées respectivement près de l'avant du bord inférieur (3a) de l'élément de toit arrière (3) et près de l'arrière de ce bord (3a).

2. Toit rétractable (29) conforme à la revendication 1, **caractérisé en ce que** la glissière (10) dont l'extrémité supérieure est située près de l'avant du bord inférieur (3a) de l'élément de toit arrière (3) a une forme sensiblement en arc de cercle dont la convexité est dirigée vers l'arrière et vers le haut du coffre, l'autre glissière (11) ayant sensiblement la forme d'un S très aplati s'étendant vers l'arrière et le bas du coffre.

3. Toit rétractable (29) conforme à l'une des revendications 1 ou 2, **caractérisé en ce que** l'élément de toit arrière (3) est entraîné le long des glissières (10, 11) au moyen d'un câble (14) solidaire de l'un (12) des galets (12, 13) dont le déplacement suivant la glissière (10) correspondante est guidé au moyen de guides (15, 16, 17), le câble (14) étant avantageusement enroulé en boucle autour de trois guides (15, 16, 17) disposés respectivement près des extrémités de la glissière (10) et près du milieu de celle-ci, le câble (14) étant de préférence en outre enroulé plusieurs tours sur un cylindre (18) dont la rotation est commandée par un moteur électrique (19), ou au moyen d'un vérin (21) dont la tige (22) est fixée de façon articulée au bord inférieur (3a) de l'élément de toit arrière (3) et dont le corps (23) est fixé de façon articulée à la carrosserie.

4. Toit rétractable (29) conforme à l'une des revendications 1 à 3, **caractérisé en ce qu'**il comprend des moyens pour commander successivement l'entraînement de l'élément de toit arrière (3) jusqu'à sa position de rangement dans le coffre (1), puis l'entraînement de l'élément de toit avant (2) jusqu'à une position de rangement dans le coffre où cet élément (2) est disposé au-dessus de l'élément de toit arrière (3), ou bien des moyens pour commander successivement l'entraînement de l'élément de toit arrière (3) jusqu'à une position intermédiaire (3') dans laquelle cet élément dégage l'accès au coffre (1) pour l'élément de toit avant (2), puis l'entraînement de cet élément de toit avant (2) vers la position de rangement dans le coffre et ensuite le déplacement final de l'élément de toit arrière (3) vers une position de rangement dans le coffre (1) où cet élément (3) est disposé au-dessus de l'élément de toit avant (2).

5. Toit rétractable (61) selon la revendication 1, le coffre arrière (1) ayant une largeur maximale (L1) plus grande que la largeur maximale (L2) de l'élément de toit arrière (3), **caractérisé en ce que** les glissières (37, 38) ont chacune un profil respectif conformé de manière telle, et les galets (39, 40) sont fixés sur le bord latéral inférieur (3a) de l'élément arrière (3) de façon telle que ledit élément de toit arrière (3) lors de son déplacement dans le sens (36) vers l'arrière du véhicule est guidé de façon à glisser vers le bas et à se loger sous les ailes arrière (34) du véhicule (30).

6. Toit rétractable (61) selon la revendication 5, **caractérisé en ce que** la glissière arrière (38) a un profil coudé comprenant de l'avant vers l'arrière un premier tronçon(41) sensiblement rectiligne ayant une première pente dirigée vers l'arrière et vers le bas, suivi par un second tronçon (42) sensiblement rectiligne ayant une seconde pente inférieure à la première pente.

7. Toit rétractable (61) selon la revendication 5 ou 6, **caractérisé en ce que** la glissière avant (37) a un profil sensiblement en S comprenant un tronçon central (44) sensiblement rectiligne ayant une pente intermédiaire entre la première pente et la seconde pente de la glissière arrière (38), précédé par un tronçon supérieur(45) court et suivi par un tronçon inférieur (46) court de plus fortes pentes

8. Toit rétractable (61) selon l'une quelconque des revendications 5 à 7, **caractérisé en ce que** les galets (47, 48) sont fixés sur des goussets respectifs (49, 50) s'étendant vers le bas à partir du bord latéral inférieur (3a) de l'élément de toit arrière (3) de sorte que les extrémités supérieures respectives (37a, 38a) des glissières (37, 38) sont situées sous la surface sensiblement horizontale (51) de l'aile arrière (34) correspondante du véhicule (30).

9. Toit rétractable (61) selon l'une quelconque des revendications 1 et 5 à 9, **caractérisé en ce que** l'une (59) des glissières a en coupe transversale une forme sensiblement en C comportant une crémaillère (52), **en ce que** le galet (53) correspondant est un pignon engrenant avec la crémaillère (52) et entraîné par un arbre (54) solidaire d'un second pignon (55) actionné par un moteur électrique (56) porté par l'élément de toit arrière (3).

10. Toit rétractable (61) selon l'une quelconque des revendications précédentes, **caractérisé en ce qu'**il comporte en avant de l'élément de toit avant (2) un troisième élément de toit (62) mobile et des moyens pour déplacer ledit troisième élément de toit (62) dans un sens ou dans l'autre entre une position fermée, dans laquelle il recouvre l'habitacle (26) entre l'élément de toit avant (2) et la traverse (63) du pare-brise (64), et une position ouverte dans laquelle il est rangé dans le coffre arrière (1) avec les éléments de toit avant (2) et arrière (3).

11. Toit rétractable (61) selon la revendication 10, **caractérisé en ce que** le troisième élément de toit (62) est monté articulé sur l'élément de toit avant (2), par exemple de chaque côté par un point d'articulation principal (65) situé près du bord arrière (66) dudit troisième élément (62) et porté par un doigt (67) en saillie vers l'avant par rapport au bord avant (69) de l'élément de toit avant (2).

12. Toit rétractable (61) selon la revendication 11, **caractérisé en ce que** le troisième élément de toit (62) est en outre relié à l'élément de toit avant (2) par un levier (70) articulé à son extrémité avant en un point d'articulation avant (71) situé en avant du point d'articulation principal (65), et à son extrémité arrière en un point d'articulation arrière (72) porté par exemple par un prolongement (73) vers le haut du bras arrière (4) de manière telle que le troisième élément de toit (62) se retrouve dans sa position ouverte dans une position sensiblement verticale devant les éléments de toit avant (2) et arrière (3).

13. Toit rétractable (61) selon la revendication 12, **caractérisé en ce que** le prolongement (73) du bras arrière (4) comporte à son extrémité une ouverture oblongue (76) traversée par un axe (77) constituant le point d'articulation arrière (72) du levier (70), et **en ce que** ledit axe (77) coulisse d'une part le long de ladite ouverture oblongue (76) et d'autre part le long d'une seconde ouverture coudée (78) faisant office de came pour guider le mouvement angulaire du troisième élément de toit (62).

14. Toit rétractable (61) selon l'une quelconque des revendications précédentes, **caractérisé en ce qu'**il comporte des moyens de verrouillage des éléments de toit (2, 3, 61) au moins dans leur position fermée, ces moyens de verrouillage (83, 87, 91, 93) étant constitués et/ou actionnés par des tiges rotatives (82, 84, 88) successives comprenant des moyens de transmission du mouvement de rotation d'une tige (82, 84) à l'autre (84, 88) et d'un élément de toit (3, 2) à l'autre (2, 61), ces tiges (82, 84, 88) étant le cas échéant associées à des crémaillères (97, 98) actionnant des doigts de verrouillage coulissants (97a, 98a).

15. Toit rétractable (29, 61) selon l'une quelconque des revendications précédentes, ce toit (29, 61) étant associé à un arceau escamotable (101) adapté à être en position haute ou basse respectivement lorsque le toit rétractable (29, 61) est dans sa position ouverte ou fermée, **caractérisé en ce que** le déplacement dudit arceau (101) de l'une de ses positions à l'autre est commandé par le déplacement correspondant de l'élément de toit avant (2), par exemple par l'intermédiaire d'un pignon (108) monté sur l'axe de rotation (109) de l'un des bras (4, 5).

## Patentansprüche

1. Dach (29, 61), das in den Heckkofferraum ( 1 ) eines abdeckbaren Fahrzeugs (30) eingezogen werden kann, das mindestens ein vorderes Dachelement (2) und ein hinteres Dachelement (3) umfasst, die mit der Karosserie (31) des Fahrzeugs (30) durch Mittel verbunden sind, die es erlauben, die zwei oben genannten Elemente (2, 3) zwischen einer Position, in der diese zwei Elemente (2, 3) den Fahrzeuginnenraum (26) des Fahrzeugs (30) bedecken, und einer Position, in der diese in dem Heckkofferraum (1) verstaut sind, zu bewegen, **dadurch gekennzeichnet, dass** die oben genannten Mittel einerseits zwei Arme (4, 5) umfassen, die mit der Karosserie (31) durch Gelenke (6, 7) und mit dem vorderen Dachelement (2) durch andere Gelenke (8, 9) so schwenkend verbunden sind, dass ein verformbares Viereck gebildet wird, und andererseits zwei Gleitschienen (10, 11; 37, 38; 59) umfasst, die mit der Karosserie fest verbunden sind, in welche jeweils eine Rolle (12, 13; 39, 40; 53) eingefügt ist, die von dem unteren Rand (3a) des hinteren Dachelements (3) getragen wird, wobei sich das obere Ende der Gleitschienen (10, 11; 37, 38; 59) in der Nähe des unteren Rands (3a) des hinteren Dachelements (3) befindet, und sich das untere Ende der Gleitschienen (10, 11; 37, 38; 59) im Inneren des Heckkofferraums (1) befindet, wobei die Gleitschienen (10, 11; 37, 38; 59) ausgebildet sind, um das Bewegen des hinteren Dachelements (3) zwischen einer Position, in welcher dieses Element (3) den hinteren Teil des Fahrzeuginnenraums (26) des Fahrzeugs (30) abdeckt, und einer Position, in welcher dieses Element (3) komplett in dem Heckkofferraum (1) aufgenommen ist, zu führen, wobei die zwei Arme (4, 5), die an das vordere Dachelement (2) angelenkt sind, zwischen einer Position, in welcher dieses Element (2) den vorderen Teil des Fahrzeuginnenraums (26) abdeckt, und einer Position, in welcher dieses Element (2) komplett in dem Heckkofferraum (1) aufgenommen ist, in eine im Wesentlichen zu dem hinteren Dachelement (3) parallele Position schwenken können, und dadurch, dass die oberen Enden der Gleitschienen (10, 11) vorzugsweise jeweils in der Nähe des vorderen unteren Rands (3a) des hinteren Dachelements (3) und in der Nähe der Rückseite dieses Rands (3a) liegen.

2. Einziehbares Dach (29) gemäß Anspruch 1, **dadurch gekennzeichnet, dass** die Gleitschiene (10), deren oberes Ende sich in der Nähe der Vorderseite des unteren Rands (3a) des hinteren Dachelements (3) befindet, eine im Wesentlichen kreisbogenförmige Form hat, deren Konvexität zur Rückseite und nach oben des Kofferraums gerichtet ist, wobei die andere Gleitschiene (11) im Wesentlichen die Form eines stark abgeflachten S hat, das sich zur Rückseite und Unterseite des Kofferraums erstreckt.

3. Einziehbares Dach (29) gemäß einem der Ansprüche 1 oder 2, **dadurch gekennzeichnet, dass** das hintere Dachelement (3) entlang der Gleitschienen (10, 11) mittels eines Kabels (14), das fest mit einer (12) der Rollen (12, 13) verbunden ist, deren Bewegung entlang der entsprechenden Gleitschiene (10) mittels Führungen (15, 16, 17) geführt ist, angetrieben wird, wobei das Kabel (14) vorteilhafter Weise als Schleife um drei Führer (15, 16, 17) gewickelt ist, die jeweils in der Nähe der Enden der Gleitschiene (10) und in der Nähe der Mitte dieser angeordnet sind, wobei das Kabel (14) vorzugsweise ferner mehrmals um einen Zylinder (18) gewickelt ist, dessen Drehung von einem Elektromotor (19) gesteuert wird, oder mittels eines Zylinders (21), dessen Schaft (22) angelenkt am unteren Rand (3a) des hinteren Dachelements (3) befestigt ist, und dessen Körper (23) angelenkt an der Karosserie befestigt ist.

4. Einziehbares Dach (29) gemäß einem der Ansprüche 1 bis 3, **dadurch gekennzeichnet, dass** es Mittel umfasst, um nacheinander das Antreiben des hinteren Dachelements (3) bis zu seiner Verstauposition in dem Kofferraum ( 1 ), dann das Antreiben des vorderen Dachelements (2) bis zu einer Verstauposition in dem Kofferraum, in der dieses Element (2) über dem hinteren Dachelement (3) angeordnet ist, zu steuern, oder Mittel zum aufeinander folgenden Steuern des Antreibens des hinteren Dachelements (3) bis zu einer Zwischenposition (3'), in der dieses Element den Zugang zu dem Kofferraum ( 1 ) für das vordere Dachelement (2) freigibt, und dann des Antreibens dieses vorderen Dachelements (2) zu der Verstauposition in dem Kofferraum und danach des abschließenden Bewegens des hinteren Dachelements (3) zu einer Verstauposition in dem Kofferraum (1), in welcher dieses Element (3) über dem vorderen Dachelement (2) angeordnet ist, zu steuern.

5. Einziehbares Dach (61) gemäß Anspruch 1, wobei der Heckkofferraum (1) eine maximale Breite (L1) hat, die größer ist als die maximale Breite (L2) des hinteren Dachelements (3), **dadurch gekennzeichnet, dass** die Gleitschienen (37, 38) jeweils ein entsprechendes Profil haben, das so ausgebildet ist und Rollen (39, 40) an dem unteren seitlichen Rand (3a) des hinteren Dachelements (3) so befestigt sind, dass das hintere Dachelement (3) bei seiner Bewegung in die Richtung (36) zu der Rückseite des Fahrzeugs so geführt wird, dass es nach unten gleitet und sich unter die hinteren Flügel (34) des Fahrzeugs (30) fügt.

6. Einziehbares Dach (61) gemäß Anspruch 5, **dadurch gekennzeichnet, dass** die hintere Gleitschiene (38) ein abgewinkeltes Profil hat, das von vom nach hinten einen im Wesentlichen geradlinigen Abschnitt (41) umfasst, der eine erste Neigung hat, die zur Rückseite und nach unten gerichtet ist, gefolgt von einem zweiten im Wesentlichen geradlinigen Abschnitt (42), der eine zweite Neigung hat, die kleiner ist als die erste Neigung.

7. Einziehbares Dach (61) nach Anspruch 5 oder 6, **dadurch gekennzeichnet, dass** die vordere Gleitschiene (37) ein im Wesentlichen S-förmiges Profil hat, das einen im Wesentlichen geradlinigen zentralen Abschnitt (44) umfasst, der eine Zwischenneigung zwischen der ersten Neigung und der zweiten Neigung der hinteren Gleitschiene (38) hat, dem ein oberer kurzer Abschnitt (45) vorausgeht, und auf den ein unterer kurzer Abschnitt (46) beide mit größeren Neigungen folgt.

8. Einziehbares Dach (61) gemäß einem der Ansprüche 5 bis 7, **dadurch gekennzeichnet, dass** die Rollen (47, 48) auf jeweiligen Verstärkungen (49, 50) befestigt sind, die sich von dem unteren seitlichen Rand (3a) des hinteren Dachelements (3) nach unten erstrecken, so dass die jeweiligen oberen Enden (37a, 38a) der Gleitschienen (37, 38) unter der im Wesentlichen horizontalen Fläche (51) des entsprechenden hinteren Flügels (34) des Fahrzeugs (30) liegen.

9. Einziehbares Dach (61) nach einem der Ansprüche 1 und 5 bis 9, **dadurch gekennzeichnet, dass** eine (59) der Gleitschienen einen Querschnitt im Wesentlichen in C-Form hat, der eine Zahnstange (52) umfasst, dadurch, dass die entsprechende Rolle (53) ein Zahnrad ist, das in die Zahnstange (52) eingreift und von einer Welle (54) angetrieben wird, die mit einem zweiten Zahnrad (55) fest verbunden ist, das von einem Elektromotor (56) angetrieben wird, der von dem hinteren Dachelement (3) getragen wird.

10. Einziehbares Dach (61) gemäß einem der vorhergehenden Ansprüche, **dadurch gekennzeichnet, dass** es vor dem vorderen Dachelement (2) ein drittes bewegliches Dachelement (62) umfasst und Mittel, um das dritte Dachelement (62) in eine Richtung oder in die andere zwischen einer geschlossenen Position, in welcher es den Fahrzeuginnenraums (26) zwischen dem vorderen Dachelement (2) und dem Querbalken (63) der Windschutzscheibe (64) abdeckt, und einer offenen Position zu bewegen, in welcher es in dem Heckkofferraum (1) mit dem vorderen (2) und hinteren (3) Dachelement verstaut ist.

11. Einziehbares Dach (61) gemäß Anspruch 10, **dadurch gekennzeichnet, dass** das dritte Dachelement (62) angelenkt auf das vordere Dachelement (2) zum Beispiel zu jeder Seite durch eine Hauptanlenkpunkt (65) in der Nähe des hinteren Rands (66) des dritten Dachelements (62) montiert ist und von einem Finger (67) getragen wird, der im Vergleich zum vorderen Rand (69) des vorderen Dachelements (2) vorsteht.

12. Einziehbares Dach (61) nach Anspruch 11, **dadurch gekennzeichnet, dass** das dritte Dachelement (62) ferner mit dem vorderen Dachelement (2) durch einen Hebel (70) verbunden ist, der an seinem vorderen Ende an einem vorderen Anlenkpunkt (71) vor dem Hauptanlenkpunkt (65) und an seinem hinteren Ende an einem hinteren Anlenkpunkt (72), der zum Beispiel von einer Verlängerung (73) nach oben des hinteren Arms (4) getragen wird, verbunden ist, so dass sich das dritte Dachelement (62) in seiner offenen Stellung in einer im Wesentlichen senkrechten Position vor dem vorderen (2) und dem hinteren Dachelement (3) befindet.

13. Einziehbares Dach (61) gemäß Anspruch 12, **dadurch gekennzeichnet, dass** die Verlängerung (73) des hinteren Arms (4) an ihrem Ende eine längliche Öffnung (76) umfasst, die von einer Achse (77) durchquert ist, die den hinteren Anlenkpunkt (72) des Hebels (70) bildet, und dadurch, dass die Achse (77) einerseits entlang der länglichen Öffnung (76) und andererseits entlang einer zweiten abgewinkelten Öffnung (78) gleitet, die zum Führen der Winkelbewegung des dritten Dachelements (62) als Nocke dient.

14. Einziehbares Dach (61) nach einem der vorhergehenden Ansprüche, **dadurch gekennzeichnet, dass** es Mittel zum Verriegeln der Dachelemente (2, 3, 61) mindestens in ihrer geschlossenen Stellung umfasst, wobei diese Verriegelungsmittel (83, 87, 91, 93) aus aufeinander folgenden Drehschäften (82, 84, 88) bestehen und/oder betätigt werden, welche Mittel zum Übertragen der Drehbewegung eines Schafts (82, 84) auf den anderen (84, 88) und von einem Dachelement (3, 2) auf das andere (2, 61) umfassen, wobei diese Schäfte (82, 84, 88) gegebenenfalls mit Zahnstangen (97, 98) verbunden sind, welche gleitende Verriegelungsfinger (97a, 98a) betätigen.

15. Einziehbares Dach (29, 61) gemäß einem der vorhergehenden Ansprüche, wobei dieses Dach (29, 61) mit einem versenkbaren Bogen (101) verbunden ist, der dazu geeignet ist, in Hoch- oder Tiefstellung zu sein, wenn sich das einziehbare Dach (29, 61) in seiner offenen oder geschlossenen Stellung befindet, **dadurch gekennzeichnet, dass** die Bewegung des Bogens (101) von einer seiner Positionen zur anderen durch das entsprechende Bewegen des vorderen Dachelements (2) zum Beispiel über ein Ritzel (108), das auf die Drehachse (109) eines der Arme (4, 5) montiert ist, gesteuert wird.

## Claims

1. A roof (29, 61) retractable into the boot (1) of a convertible vehicle (30), comprising at least one front roof element (2) and a rear roof element (3) which are connected to the body (31) of the vehicle (30) by means enabling the said two elements (2, 3) to be moved between a position in which said two elements (2, 3) cover the interior (26) of the vehicle (30) and a position in which they are stored in the boot (1), **characterised in that** the said means comprise on the one hand two arms (4, 5) connected pivotably to the body (31) by joints (6, 7) and to the front roof element (2) by other joints (8, 9) so as to form a deformable quadrilateral and, on the other hand, two runners (10, 11; 37, 38; 59) connected to the body in each of which there engages a roller (12, 13; 39, 40; 53) carried by the bottom edge (3a) of the rear roof element (3), the top end of the runners (10, 11; 37, 38; 59) being situated near the bottom edge (3a) of the rear roof element (3) and the bottom end of the runners (10, 11; 37, 38; 59) being situated inside the boot (1), the runners (10, 11; 37, 38; 59) being configured to guide the movement of the rear roof element (3) between a position in which said element (3) covers the rear part of the interior (26) of the vehicle (30) and a position in which said element (3) is entirely housed in the boot (1), the two arms (4, 5) articulated to the front roof element (2) being pivotable between a position in which said element (2) covers the front part of the interior (26) and a position in which said element (2) is entirely housed in the boot (1) in a position substantially parallel to the rear roof element (3), and **in that**, preferably, the top ends of the runners (10, 11) are situated respectively near the front of the bottom edge (3a) of the rear roof element (3) and near the rear of said edge (3a).

2. A retractable roof (29) according to claim 1, **characterised in that** the runner (10) of which the top end is situated near the front of the bottom edge (3a) of the rear roof element (3) has a shape substantially as an arc of a circle of which the convexity is directed towards the rear and towards the top of the boot, the other runner (11) having substantially the shape of a very flattened S extending towards the rear and the bottom of the boot.

3. A retractable roof (29) according to claim 1 or 2, **characterised in that** the rear roof element (3) is driven along the runners (10, 11) by means of a cable (14) connected to one (12) of the rollers (12, 13) of which the movement along the corresponding runner (10) is guided by means of guides (15, 16, 17), the cable (14) advantageously being looped around three guides (15, 16, 17) disposed respectively near the ends of the runner (10) and near the centre thereof, the cable (14) preferably also being wound in several turns around a cylinder (18), the rotation of which is controlled by an electric motor (19), or by means of a jack (21) of which the rod (22) is articulatedly fixed to the bottom edge (3a) of the rear roof element (3) and of which the body (23) is articulatedly fixed to the body.

4. A retractable roof (29) according to any one of claims 1 to 3, **characterised in that** it comprises means for successively controlling the drive of the rear roof element (3) into its position of storage in the boot (1), and then the drive of the front roof element (2) into a position in which it is stored in the boot where the said element (2) is disposed above the rear roof element (3), or means for successively controlling the drive of the rear roof element (3) into an intermediate position (3') in which said element frees the access to the boot (1) for the front roof element (2), and then the drive of said front roof element (2) into the position of storage in the boot and then the final movement of the rear roof element (3) into a position of storage in the boot (1) where said element (3) is disposed above the front roof element (2).

5. A retractable roof (61) according to claim 1, the boot (1) having a maximum width (L1) larger than the maximum width (L2) of the rear roof element (3), **characterised in that** the runners (37, 38) each have a respective profile so configured, and the rollers (39) are fixed on the bottom side edge (3a) of the rear element (3) in such manner, that said rear roof element (3) on its movement in the direction (36) towards the rear of the vehicle is guided so as to slide downwards and be housed beneath the rear wings (34) of the vehicle (30).

6. A retractable roof (61) according to claim 5, **characterised in that** the rear runner (38) has a curved profile comprising from front to rear a first substantially rectilinear section (41) having a first slope directed towards the rear and downwards, followed by a second substantially rectilinear section (42) having a second slope less than the first slope.

7. A retractable roof (61) according to claim 5 or 6, **characterised in that** the front runner (37) has a substantially S-shaped profile comprising a central substantially rectilinear section (44) having a slope intermediate the first slope and the second slope of the rear runner (38) preceded by a top short section (45) and followed by a short bottom section (46) of steeper slopes.

8. A retractable roof (61) according to any one of claims 5 to 7, **characterised in that** the rollers (47, 48) are fixed on respective brackets (49, 50) extending down from the bottom side edge (3a) of the rear roof element (3) so that the respective top ends (37a, 38a) of the runners (37, 38) are situated beneath the substantially horizontal surface (51) of the corresponding rear wing (34) of the vehicle (30).

9. A retractable roof (61) according to any one of claims 1 and 5 to 9, **characterised in that** one (59) of the runners has a substantially C-shaped cross-section comprising a rack (52), **in that** the corresponding roller (53) is a pinion meshing with the rack (52) and driven by a shaft (54) connected to a second pinion (55) actuated by an electric motor (56) carried by the rear roof element (3).

10. A retractable roof (61) according to any one of the preceding claims, **characterised in that** it comprises in front of the front roof element (2) a third movable roof element (62) and means for moving said third roof element (62) in either direction between a closed position in which covers the interior (26) between the front roof element (2) and the cross-member (63) of the windscreen (64), and an open position in which it is stored in the boot (1) with the front and rear roof elements (2, 3).

11. A retractable roof (61) according to claim 10, **characterised in that** the third roof element (62) is articulated on the front roof element (2), for example on each side by a main point of articulation (65) situated near the rear edge (66) of said third element (62) and carried by a finger (67) projecting forwardly with respect to the front edge (69) of the front roof element (2).

12. A retractable roof (61) according to claim 11, **characterised in that** the third roof element (62) is also connected to the front roof element (2) by a lever (70) articulated at its front end at a front point of articulation (71) situated in front of the main point of articulation (65), and at its rear end at a rear point of articulation (72) carried, for example, by an upward extension (73) of the rear arm (4) in such manner that the third roof element (62) in its open position is situated in a substantially vertical position in front of the front and rear roof elements (2, 3).

13. A retractable roof (61) according to claim 12, **characterised in that** the extension (73) of the rear arm (4) has at its end an oblong aperture (76) through which extends a spindle (77) forming the rear point of articulation (72) of the lever (70), and **in that** said spindle (77) slides on the one hand along the said oblong aperture (76) and on the other hand along a second curved aperture (78) acting as a cam to guide the angular movement of the third roof element (62).

14. A retractable roof (61) according to any one of the preceding claims, **characterised in that** it comprises means for locking the roof elements (2, 3, 61) at least in their closed position, said locking means (83, 87, 91, 93) being formed and/or actuated by successive rotary rods (82, 84, 88) comprising means for transmitting the rotary movement of one rod (82, 84) to the other (84, 88), and from one roof element (3, 2) to the other (2, 61), said rods (82, 84, 88) being associated if necessary with racks (97, 98) actuating sliding locking fingers (97a, 98a).

15. A retractable roof (29, 61) according to any one of the preceding claims, said roof (29, 61) being associated with a retractable roll bar (101) adapted to be in the top or bottom position respectively when the retractable roof (29, 61) is in its open or closed position, **characterised in that** the movement of the said roll bar (101) from one of its positions to the other is controlled by the corresponding movement of the front roof element (2), for example by means of a pinion (108) mounted on the rotational spindle (109) of one of the arms (4, 5).
